# EUROPÄISCHE PATENTSCHRIFT

(11) **EP 1 856 788 B1**
(45) Veröffentlichungstag und Bekanntmachung des Hinweises auf die Patenterteilung: **10.04.2013**
(21) Anmeldenummer: 06724855.9
(22) Anmeldetag: 20.02.2006
(51) Int. Cl.: H02K 5/167, H02K 5/14

(54) **ELEKTROMOTOR MIT GLEITLAGER**
ELECTROMOTOR WITH SLIDE BEARING
MOTEUR ELECTRIQUE

(30) Priorität: 08.03.2005 DE 102005010459
(43) Veröffentlichungstag der Anmeldung: 21.11.2007
(73) Patentinhaber: Vorwerk & Co. Interholding GmbH, 42275 Wuppertal (DE)
(72) Erfinder: SCHMIDT, Dirk, 51688 Wipperfürth (DE)
(74) Vertreter: Müller, Enno
(86) Internationale Anmeldenummer: PCT/EP2006/060096
(87) Internationale Veröffentlichungsnummer: WO 2006/094894

(56) Entgegenhaltungen:
- EP-A- 0 052 970
- EP-A1- 1 207 614
- DE-A1- 2 212 186
- DE-A1- 2 229 377
- DE-A1- 2 533 283
- DE-A1- 3 840 296
- GB-A- 2 013 041
- US-A- 3 051 373
- US-A- 3 818 255
- US-A- 3 831 048
- US-A- 4 862 582

## Beschreibung

Die Erfindung betrifft einen Elektromotor nach den Merkmalen des Oberbegriffs des Anspruches 1.

Elektromotoren der in Rede stehenden Art sind bekannt. Die Rotorwellen solcher Elektromotoren sind in üblicher Weise gelagert, wobei diesbezüglich Wälzlager wie Kugel- oder Rollenlager, sowie Gleitlager, beispielsweise Kalottenlager, zum Einsatz kommen. Insbesondere bei Kleinmotoren, wie sie beispielsweise in Haushaltsgeräten zum Einsatz kommen, können im Bereich der Rotorwellenlager relativ hohe Temperaturen herrschen. Diese kleinen Motoren sind zumeist schnelllaufende Elektromotoren, so insbesondere Kommutator- oder Reluktanzmotoren. Ein Kommutatormotor der in Rede stehenden Art ist beispielsweise aus der DE 198 33 802 A1 bekannt. Dessen Rotorwelle ist beidseitig des Rotors in Kalottenlagern gehalten.

Aus der EP 0 052 970 A1 ist ein Elektromotor bekannt, bei welchem ein Gleitlager in einer manschettenartigen Halterung, die im Querschnitt U-förmig gestaltet ist, aufgenommen ist. Diese manschettenförmige Halterung weist Durchbrüche zur Bildung von Luftwegen auf. Aus der DE 2212186 A1 ist es bekannt, bei einem Elektromotor die Rotorwelle in einem Kalottenlager zu lagern und mittels einer Klemmbrille zu sichern.

Ausgehend von dem zunächst genannten Stand der Technik stellt sich der Erfindung die Aufgabe, ein vorteilhaft gekühltes Lager für eine Rotorwelle eines Elektromotors anzugeben.

Diese Aufgabe ist beim Gegenstand des Anspruches 1 gelöst.

Durch die Anordnung der Luftwege ist eine günstige Kühlung des Kalottenlagers erreicht. Über diese Luftwege kann die Luft entlang des Kalottenlagers, orientiert an der Rotorwellenerstreckung, streifen, was zur Kühlung des Lagerbereiches beisteuert.

Die Luftwege sind in einem radial eng bemessenen Bereich um die Lagerstelle des Gleitlagers ausgebildet. So können weiter beispielsweise die Luftwege innerhalb eines das Gleitlager umfassenden Ringbereiches ausgebildet sein, der etwa um das Radialmaß des Gleitlagers zu dem Gleitlager beabstandet ist. Die Luftwege schließen radial unmittelbar an das Gleitlager an, ggf. beabstandet zum Gleitlager durch eine Materialstärke des das Gleitlager aufnehmenden Lagergehäuses. Das Gleitlager ist zudem bevorzugt einschließlich der Luftwege innerhalb eines zylindrisch das Gleitlager nach außen überragenden Lagergehäuses angeordnet. Es ist vorgesehen, dass das Lagergehäuse und die Luftwege in einem als Kunststoffteil ausgebildeten Gehäuseteil, der so genannten Lagerbrücke, ausgeformt sind. Hierbei handelt es sich bevorzugt um ein Kunststoff-Spritzgussteil. Diese Lagerbrücke bildet weiter bevorzugt integral auch die Aufnahmen für mit dem Kommutator zusammenwirkende Kohlen aus. Die Lagerbrücke ist von axial außen auf die Rotorwelle montierbar. Nach dieser Montage ist die Rotorwelle in dem in der Lagerbrücke gefassten Gleitlager gehalten. Zugleich sind die Aufnahmen für die Kohlen radial dem Kommutator zugeordnet. Die Lagerbrücke ist mit dem Motorgehäuse klemmverbunden. Dieses Motorgehäuse kann ein das Rotor-Stator-Paket umfassendes Blechgehäuse sein, während die Lagerbrücke mit den Aufnahmen für die Kohlen sowie dem Lagersitz für das Gleitlager bevorzugt als Kunststoffteil ausgebildet ist. Durch die Klemmverbindung ist die Montage der Lagerbrücke im Wesentlichen vereinfacht. Von axial außen ist die Rotorwelle umgebend, eine Klemmbrille zur Zusammenwirkung mit dem Gleitlager montiert. Hierbei handelt es sich um ein Festlegungselement für das Gleitlager, welches sich an seinem Außenradius gegen die Lagerbrücke stützt während es über Federelemente nach radial innen in Richtung auf den Achskörper auf das Gleitlager, so insbesondere auf das Kalottenlager einwirkt. Durch die vorgesehene axial von außen zugängliche Position ist die Montage dieser Klemmbrille wesentlich vereinfacht. Des Weiteren ist durch diese axial exponierte Anordnung der Klemmbrille eine verbesserte Abstrahlung der am Gleitlager entstehenden Wärme erreicht, was die gewünschte Kühlung, insbesondere gehemmt durch die schlechte Wärmeleitfähigkeit des Kunststoffes der Lagerbrücke, wiederum positiv unterstützt. Die als Metallteil ausgebildete Klemmbrille weist Luftwege fördernde Durchbrüche auf, die weiter nach Montage der Klemmbrille in Überdeckung zu den im Bereich dar Lagerbrücke vorgesehenen Luftwegen gebracht sind. Auch ist vorgesehen, dass auf der Rotorwelle zwischen dem Rotor und dem Gleitlager innerhalb des Motorgehäuses ein Lüfterrad angeordnet ist. Dieses dient zunächst zur Abführung der Wärme im Motorgehäuse, die durch die beim Betrieb wirkende Verlustleistung entsteht. Es ergibt sich jedoch noch der positive Effekt, dass über dieses Lüfterrad zugleich durch die Luftwege im Bereich der Lagerbrücke Luft angesaugt wird, was zur weiteren Steigerung der Kühlleistung im Bereich des Rotorwellen-Gleitlagers beiträgt. Bevorzugt ist hierdurch ein Radialgebläse ausgebildet, welches in Rotorwellenrichtung, d.h. axial durch die Luftwege Luft ansaugt und nach radial außen ausbläst. Weiter bevorzugt ist hierbei das Lüfterrad hinsichtlich seiner Ansaugeigenschaften so gewählt, dass zusätzlich zur Abführung der Verlustleistungswärme auch eine zur Lagerkühlung ausreichende Luftströmung erzeugt wird. Das Lüfterrad ist bevorzugt auf der dem zu kühlenden Gleitlager zugewandten Seite des Rotors auf der Rotorwelle innerhalb des Motorgehäuses drehfest gehaltert, kann aber alternativ auch im Bereich des dem zu kühlenden lagerabgewandten Wellenendes innerhalb des Motorgehäuses positioniert sein. In einer Weiterbildung des Erfindungsgegenstandes ist vorgesehen, dass zwischen dem Gleitlager und dem Lüfterrad ein Kommutator angeordnet ist, über welchen zufolge dieser Ausgestaltung auch die durch die Luftwege angesaugte Luft geführt wird. Das Motorgehäuse kann des Weiteren die Radialöffnungen zum Austritt der über das Lüfterrad angesaugten und radial austretenden Luft aufweisen.

Nachstehend ist die Erfindung anhand der beigefügten Zeichnung, welche lediglich zwei Ausführungsbeispiele darstellt, näher erläutert. Es zeigt:
- Fig.1: einen erfindungsgemäßen Elektromotor in Seitenansicht;
- Fig. 2: die Stirnansicht gemäß dem Pfeil II in Fig. 1;
- Fig. 3: den Schnitt gemäß der Linie III - III in Fig. 2;
- Fig. 4: eine perspektivische Darstellung des Elektromotors;

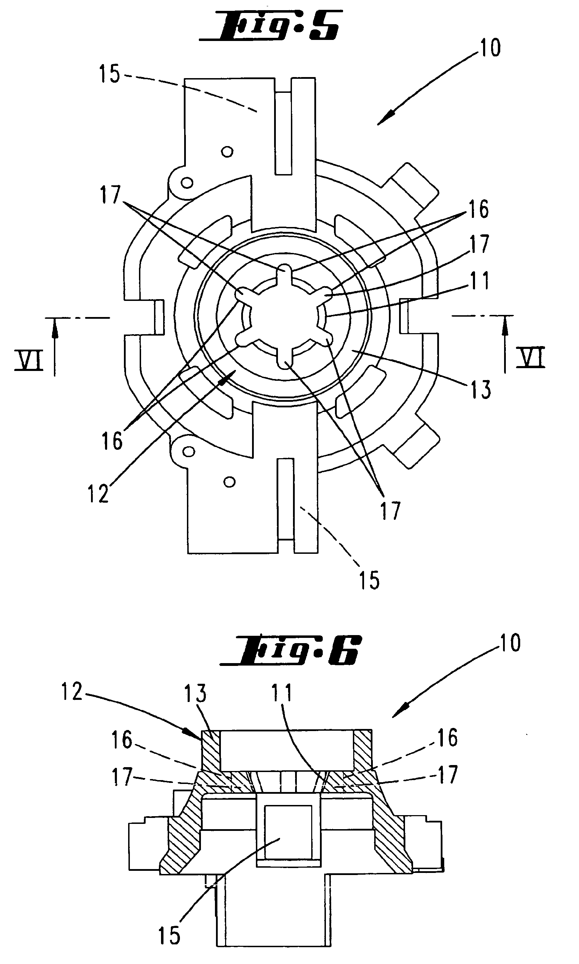

- Fig. 5: eine, ein Lagergehäuse für die Rotorwelle ausformende Lagerbrücke in einer Einzeldarstellung in Stirnansicht;
- Fig. 6: den Schnitt gemäß der Linie VI in Fig. 5;

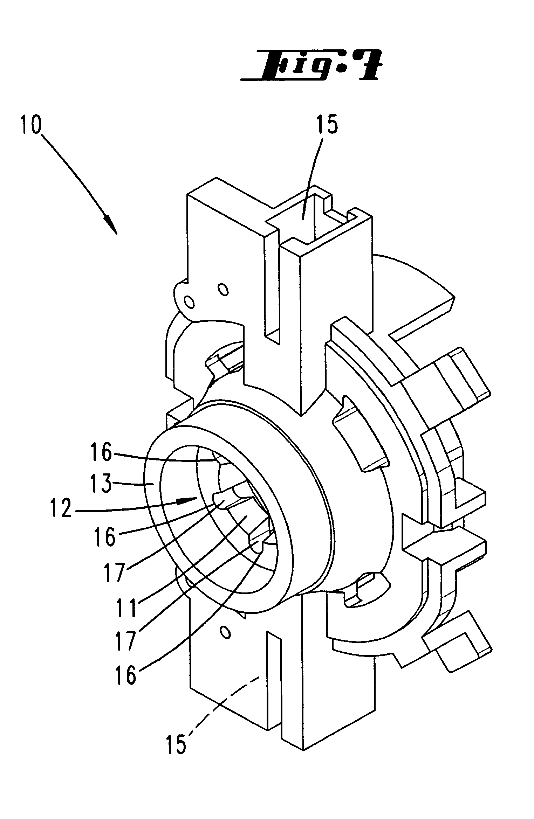

- Fig. 7: eine perspektivische Einzeldarstellung der Lagerbrücke mit Blick auf die Stirnseite;

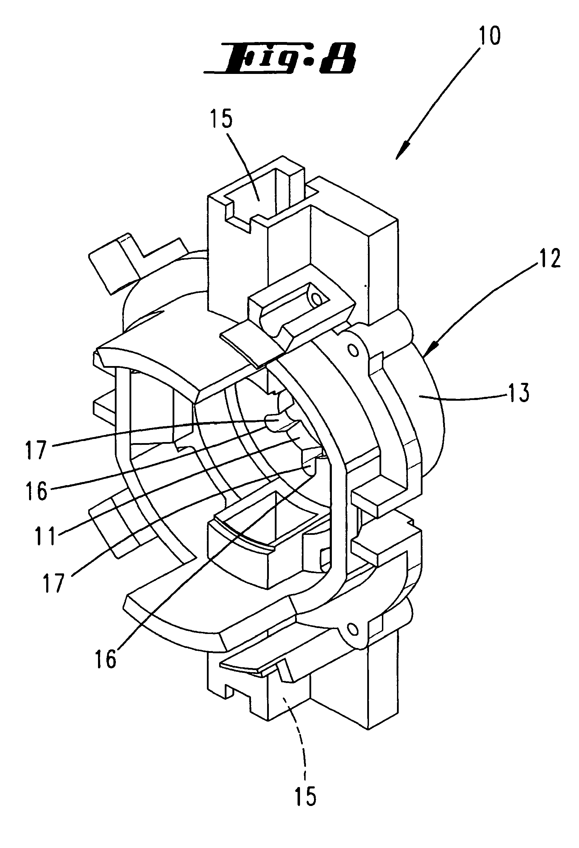

- Fig. 8: eine perspektivische Einzeldarstellung der Lagerbrücke mit Blick auf die dem Rotor und Stator des Elektromotors zuzuwendende Rückseite;
- Fig. 9: eine perspektivische Explosionsdarstellung der Lagerbrücke, der zuzuordnenden Rotorwelle nebst Kommutator und den in der Lagerbrücke zu halternden Kohlen;
- Fig. 10: eine der Fig. 5 entsprechende Stirnansicht, jedoch mit einer alternativen Anordnung und Ausgestaltung der Luftwegsöffnungen.

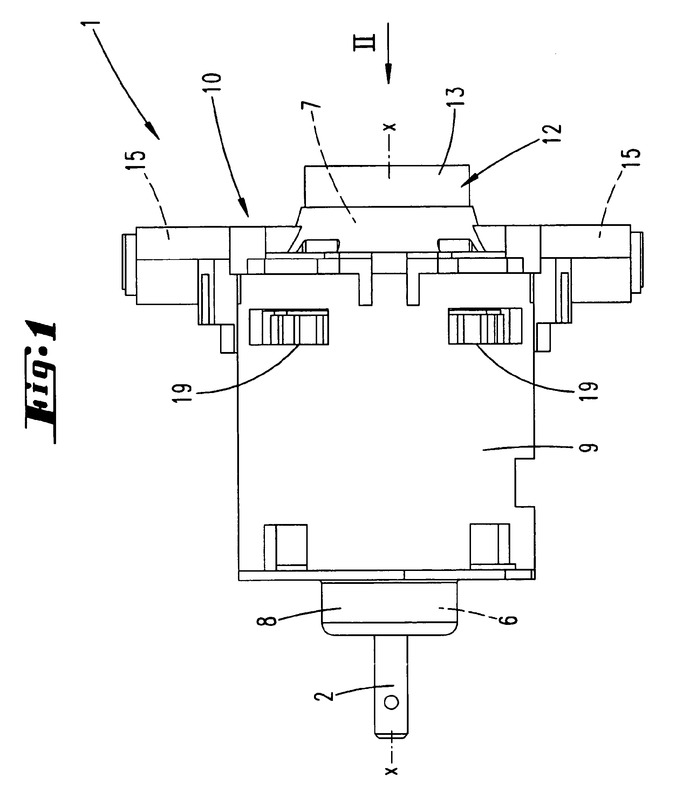

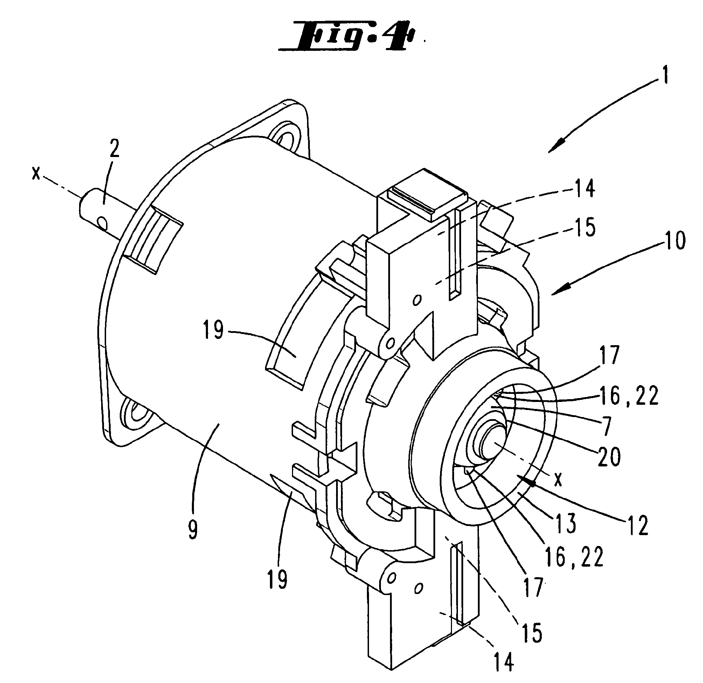

Dargestellt und beschrieben ist zunächst mit Bezug zu den Figuren 1 bis 4 ein Elektromotor 1, welcher im Wesentlichen besteht aus einer Rotorwelle 2, einem auf letzterer drehfest angeordneten Rotor 3 und einem Stator 4, sowie einem Kommutator 5.

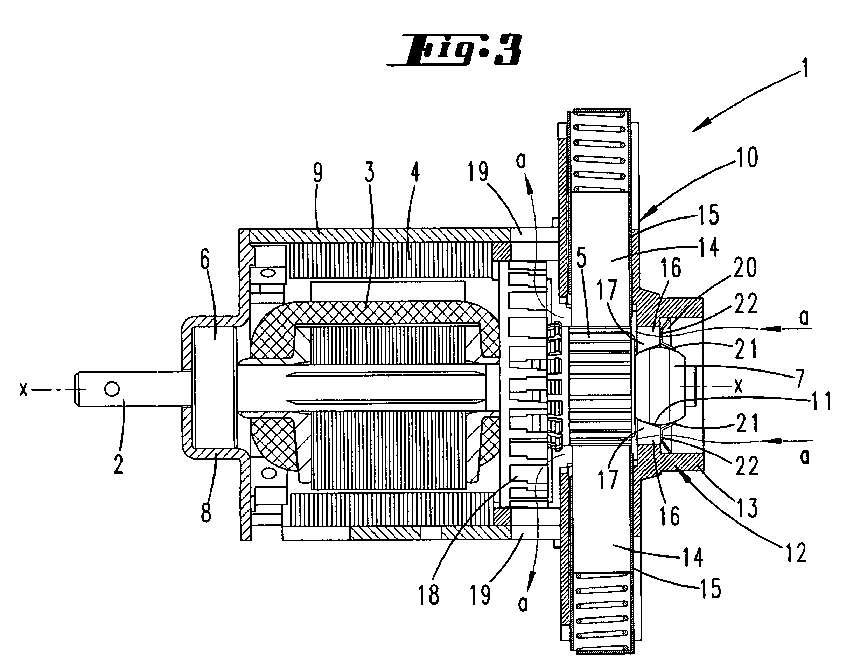

Wie aus der Darstellung in Fig. 3 zu entnehmen, ist die Rotorwelle 2 beidseitig des Rotors 3 gelagert, wobei der dem Kommutator 5 abgewandte Abschnitt der Rotorwelle 2 in einem nicht näher dargestellten Kugellager 6 gehalten ist.

Das über den Kommutator 5 hinausragende Ende der Rotorwelle 2 ist gehalten in einem Gleitlager 7, welches in dem dargestellten Ausführungsbeispiel als Kalottenlager ausgeformt ist.

Beide Lager (Kugellager 6 und Gleitlager 7) sind gehäuseseitig des Elektromotors 1 gehaltert. Konkret ist die Ausgestaltung so gewählt, dass das Kugellager 6 im Bereich eines axial nach außen vorstehenden Doms 8 eines im Wesentlichen als Hohlzylinder ausgeformten Motorgehäuses 9 gehaltert ist.

In dem Motorgehäuse 9 ist der Stator 4 befestigt.

Das gegenüberliegende Gleitlager 7 ist in einer ein gesondertes Gehäuseteil bildenden Lagerbrücke 10 festgelegt. Dieses ist in dem dargestellten Ausführungsbeispiel ein Kunststoffteil. Diese Lagerbrücke 10 ist von axial außen auf die Rotorwelle 2 montiert und mit dem Motorgehäuse 9 klemmverbunden. Weiter können die Teile auch mechanisch, so beispielsweise schraubverbunden oder auch darüber hinaus klebeverbunden sein.

Die Lagerbrücke 10 weist einen zentralen Pfannenbereich 11 zur Aufnahme des Gleitlagers 7 auf. Das hierdurch gebildete Lagergehäuse 12 setzt sich fort in einen nach axial außen sich vom Pfannenbereich 11 erstreckenden Topfabschnitt 13, dessen innerer Durchmesser etwa dem 1,5- bis 2-fachen Durchmesser des Gleitlagers 7 entspricht.

Die Länge des über das Gleitlager 7 nach axial außen abragenden Wellenstumpfes ist so bemessen, dass dieser nicht über die Topf-Öffnungsebene des Topfabschnittes 13 hinweg ragt. Das gegenüberliegende Wellenende hingegen ragt über den Gehäusedom 8 nach außen vor, zur Bereitstellung eines Anschlussabschnitts für ein in Rotation zu bringendes Anschlussteil, wie beispielsweise ein Gebläserad eines Staubsauger-Sauggebläses.

Die vom Motorgehäuse 9 gesonderte Lagerbrücke 10 ist zugleich Träger von mit dem Kommutator 5 zusammenwirkenden Kohlen 14. Entsprechend sind zwei diametral zur Rotorwellenachse x gegenüberliegende Kohle-Aufnahmeschäfte 15 ausgeformt. Diese sind axial so zum Pfannenbereich 11 des Gehäuseteils 10 distanziert, dass die aufzunehmenden Kohlen 14 in Radialerstreckung zum Kommutator 5 ausgerichtet sind.

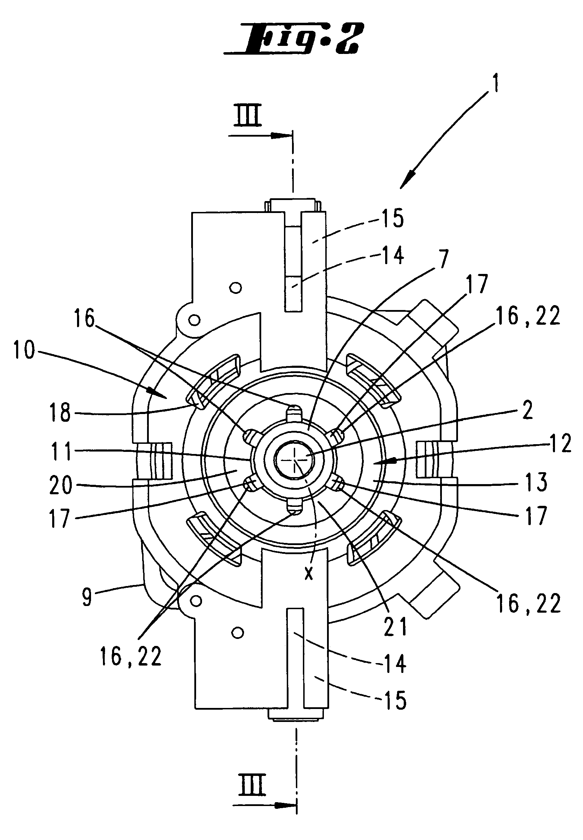

Im lagergehäuseseitigen Pfannenbereich 11 sind mehrere, gleichmäßig zueinander um die Wellenachse x angeordnete Durchbrechungen 16 in dem Lagerboden vorgesehen. In dem dargestellten Ausführungsbeispiel sind dies sechs jeweils einen Winkel von 60° zueinander einnehmende Durchbrechungen 16, die in einem Grundriss gemäß der Darstellung in Fig. 2 langlochförmig sich zum Lager hin öffnend ausgeformt sind. Diese Durchbrechungen 16 sind innerhalb des durch den Topfabschnitt 13 begrenzten Bereichs des Lagergehäuses 12 bzw. des Pfannenbereiches 11 positioniert und entsprechend in unmittelbarer Nähe und Zuordnung zum aufzunehmenden Gleitlager 7.

Diese Durchbrechungen 16 formen in Wellenrichtung verlaufende Luftwege 17 aus.

Zur Zusammenwirkung mit dem Gleitlager 7, insbesondere zur Festsetzung desselben ist von axial außen auf die Rotorwelle eine als Metallteil ausgeformte Klemmbrille 20 montiert. Diese sitzt in dem Lagergehäuse 12 ein unter federnder Klemmeinwirkung über freigestanzte Federzungen 21 auf das Gleitlager 7.

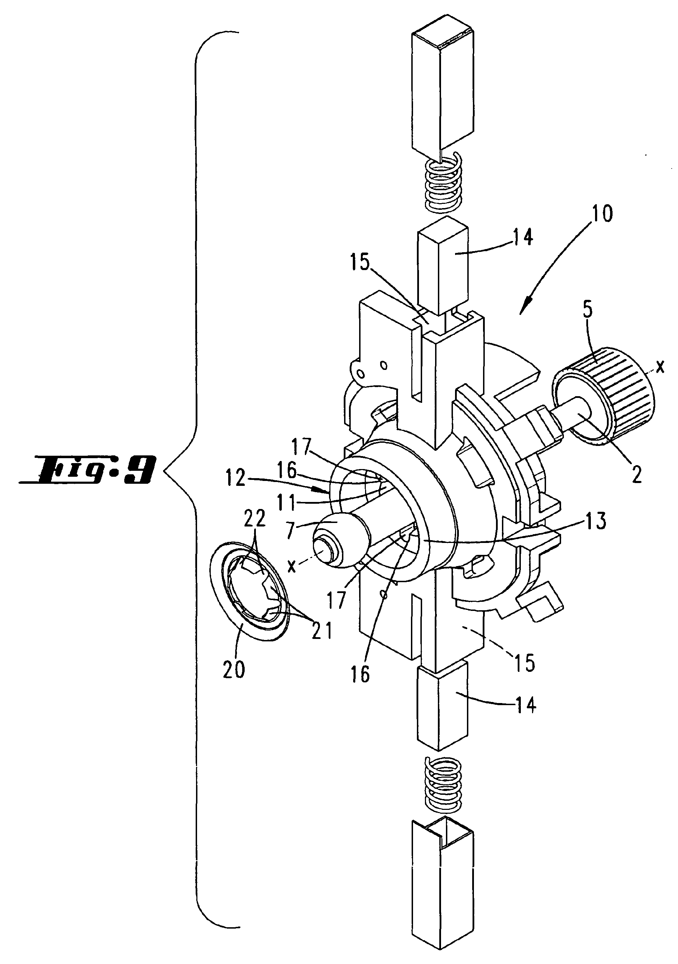

Wie insbesondere aus der Perspektivdarstellung in Fig. 9 zu erkennen, ist die Klemmbrille 20 mit die Luftwege 17 im Lagergehäuse 12 fördernden Durchbrüchen 22 versehen, welch letztere durch Freistanzung der vorgenannten Federzungen 21 erreicht sind.

Durch diese Durchbrüche 22 kann die über das Lüfterrad 18 angesaugte Luft durch die lagergehäuseseitigen Durchbrechungen 16 zur Kühlung des Gleitlagers 7 strömen.

Im Zusammenhang mit der erreichten axialen Luftumströmung des Gleitlagers 7 ist durch die nach axial außen gerichtete Anordnung der Klemmbrille 20 zugleich eine gute Ableitung der im Lagerbereich entstehenden Wärme nach axial außen erreicht. Darüber hinaus ist durch die axial außen vorgesehene Anordnung der Klemmbrille 20 auch deren Montage im Wesentlichen erleichtert.

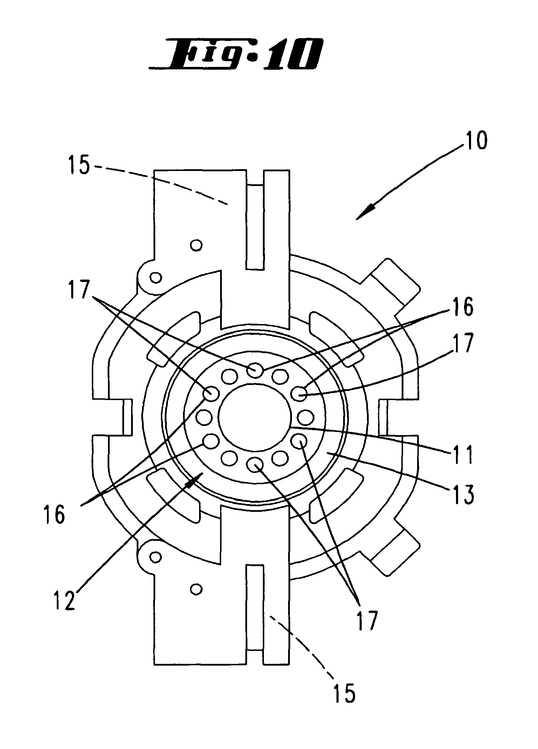

Wie in Fig. 10 dargestellt, können die Luftwege 17 bildenden Durchbrechungen 16 alternativ auch so ausgebildet sein, dass sie keine Öffnung zum Lager hin aufweisen. Die radial um den Pfannenbereich 11 zu diesem hin abgegrenzt angeordneten Durchbrechungen 16 bieten den Vorteil eines stabileren Lagersitzes, da eine Segmentierung des Pfannenbereiches 11 unterbleibt. Die dadurch verursachte Querschnittsverminderung für die Luftwege 17 kann, wie in Fig. 10 erkennbar, durch eine vergrößerte Anzahl von Durchbrechungen 16 ausgeglichen werden. Eine gegebenenfalls notwendige radiale Ausrichtung der Klemmbrille 20 zur Herstellung einer strömungstechnisch vorteilhaften Dekkungsgleichheit zwischen den Durchbrechungen 16 und den freigestanzten Durchbrüchen 22 der Klemmbrille 20 entfällt durch diese Ausgestaltungsvariante.

Um die Kühleigenschaften weiter zu verbessern ist zwischen dem Kommutator 5 und dem Rotor 3 auf der Rotorwelle 2 zusätzlich ein Lüfterrad 18 drehfest angeordnet. Dieses formt ein Radialgebläse aus und bewirkt im Betrieb des Elektromotors 1 neben dem Abtransport von im Motorgehäuse 9 entstehender Verlustleistung auch ein Ansaugen von Kühlluft durch die um das Gleitlager 7 angeordneten Durchbrechungen 16, welche Kühlluft hiernach den Kommutator 5 überstreichend nach radial außen ausgeblasen wird. Entsprechend verfügen die Lagerbrücke 10 und der in Überlappung mit diesem Gehäuseteilabschnitt stehende Endabschnitt des Motorgehäuses 9 über Austrittsöffnungen 19. Die Luftströmungen sind schematisch in Fig. 3 durch die Pfeile a dargestellt.

Durch die erfindungsgemäße Lösung ist eine verbesserte Kühlung des Gleitlagers 7 (Kalottenlager) erreicht.

## Patentansprüche

1. Elektromotor (1) mit einem Rotor (3) und einem Stator (4), wobei der Rotor (3) eine Rotorwelle (2) aufweist und die Rotorwelle (2) in einem als Kalottenlager (7) ausgestalteten Gleitlager gehalten ist, wobei weiter radial außerhalb des Kalottenlagers (7), jedoch unmittelbar benachbart zu dem Kalottenlager (7) und innerhalb eines aus Kunststoff gebildeten, eine Lagerbrücke (10) bildenden Lagergehäuses (12), in Richtung der Rotorwelle (2) verlaufende Luftwege (17) ausgebildet sind, wobei die Lagerbrücke (10) einen zentralen Pfannenbereich (11) zur Aufnahme des Kalottenlagers (7) aufweist, wobei der zentrale Pfannenbereich (11) radial unmittelbar an das Kalottenlager (7) anschließt, wobei das Lagergehäuse (12) sich in einen axial außen vom Pfannenbereich (11) erstreckenden Topfabschnitt (13) fortsetzt, wobei die Luftwege (17) in dem das Kalottenlager (7) aufnehmenden zentralen Pfannenbereich (11) des Lagergehäuses (12) gebildet sind, wobei von außen, die Rotorwelle (2) umgebend, eine Klemmbrille (20) zur Zusammenwirkung mit dem Gleitlager (7) montiert ist und wobei die als Metallteil ausgebildete Klemmbrille (20) die Luftwege (17) fördernde Durchbrüche aufweist.

2. Elektromotor nach Anspruch 1, **dadurch gekennzeichnet, dass** das Lagergehäuse (12) das Gleitlager (7) nach außen überragt.

3. Elektromotor nach einem der Ansprüche 1 oder 2, **dadurch gekennzeichnet, dass** die Lagerbrücke (10) integral auch die Aufnahmen (15) für mit dem Kommutator (5) zusammenwirkenden Kohlen (14) ausbildet.

4. Elektromotor nach einem der Ansprüche 1 bis 3, **dadurch gekennzeichnet, dass** die Lagerbrücke (10) von außen auf die Rotorwelle (2) montierbar ist.

5. Elektromotor nach einem der Ansprüche 1 bis 4, **dadurch gekennzeichnet, dass** die Lagerbrücke (10) mit dem Motorgehäuse (9) klemmverbunden ist.

6. Elektromotor nach einem der Ansprüche 1 bis 5, **dadurch gekennzeichnet, dass** auf der Rotorwelle (2) zwischen dem Rotor (3) und dem Gleitlager (7) ein Lüfterrad (18) angeordnet ist.

7. Elektromotor nach Anspruch 6, **dadurch gekennzeichnet, dass** zwischen dem Gleitlager (7) und dem Lüfterrad (18) ein Kommutator (5) angeordnet ist.

## Claims

1. Electric motor (1) comprising a rotor (3) and a stator (4), the rotor (3) having a rotor shaft (2) and the rotor shaft (2) being held in a plain bearing (7) built as a spherical bearing, wherein air paths (17) which run in the direction of the rotor shaft (2) being formed radially outside the plain bearing (7) but directly adjacent to the plain bearing (7) and within a bearing housing (12) which is formed from plastics and forms a bearing bridge (10), wherein the bearing bridge (10) has a central socket region (11) for receiving the spherical bearing (7), wherein the central socket region (11) is radially joining immediately to the spherical bearing (7), wherein the bearing housing (12) does extend it to a cup portion (13) being axially outside to the socket region (11), wherein the air paths (17) are provided for in the central socket region (11) of the bearing housing (12) receiving the spherical bearing (7), wherein from outside, surrounding the motor shaft (2) a clamping collar (20) is fitted for engaging the plain bearing (7) and wherein the clamping collar (20) which is formed as a metal part has apertures which facilitate the air paths (17).

2. Electric motor according to Claim 1, **characterized in that** the bearing housing (12) protrudes beyond the plain bearing (7) towards the outside.

3. Electric motor according to either of Claims 1 and 2, **characterized in that** the bearing bridge (10) also integrally forms the receptacles (15) for carbon brushes (14) which interact with the commutator (5).

4. Electric motor according to one of Claims 1 to 3, **characterized in that** the bearing bridge (10) can be fitted onto the rotor shaft (2) from the outside.

5. Electric motor according to one of Claims 1 to 4, **characterized in that** the bearing bridge (10) is clampingly connected to the motor housing (9).

6. Electric motor according to one of Claims 1 to 5, **characterized in that** a fan impeller (18) is disposed on the rotor shaft (2) between the rotor (3) and the plain bearing (7).

7. Electric motor according to Claim 6, **characterized in that** a commutator (5) is disposed between the plain bearing (7) and the fan impeller (18).

## Revendications

1. Moteur électrique (1) comprenant un rotor (3) et un stator (4), dans lequel le rotor (3) présente un arbre de rotor (2) et l'arbre de rotor (2) est supporté dans un palier lisse conformé en palier à calotte (7), dans lequel sont formées des voies d'air (17) s'étendant dans la direction de l'arbre de rotor (2) encore radialement à l'extérieur du palier à calotte (7), mais directement au voisinage du palier à calotte (7) et à l'intérieur d'un boîtier de palier (12) formé d'une matière plastique et formant un pont de palier (10), dans lequel le pont de palier (10) présente une zone de coussinet centrale (11) pour recevoir le palier à calotte (7), dans lequel la zone de coussinet centrale (11) se raccorde radialement directement au palier à calotte (7), dans lequel le boîtier de palier (12) se prolonge dans une section en pot (13) s'étendant axialement à l'extérieur de la zone de coussinet (11), dans lequel les voies d'air (17) sont formées dans la zone de coussinet centrale (11) du boîtier de palier (12) recevant le palier à calotte (7), dans lequel est montée de l'extérieur, entourant l'arbre de rotor (2), une bride de serrage (20) pour coopérer avec le palier lisse (7) et dans lequel la bride de serrage (20) conformée en pièce métallique présente des passages formant les voies d'air (17).

2. Moteur électrique selon la revendication 1, **caractérisé en ce que** le boîtier de palier (12) dépasse le palier lisse (7) vers l'extérieur.

3. Moteur électrique selon la revendication 1 ou la revendication 2, **caractérisé en ce que** le pont de palier (10) forme intégralement aussi les logements (15) pour des charbons (14) coopérant avec le commutateur (5).

4. Moteur électrique selon l'une quelconque des revendications 1 à 3, **caractérisé en ce que** le pont de palier (10) peut être monté sur l'arbre de rotor (2) de l'extérieur.

5. Moteur électrique selon l'une quelconque des revendications 1 à 4, **caractérisé en ce que** le pont de palier (10) est connecté par serrage sur le boîtier de moteur (9).

6. Moteur électrique selon l'une quelconque des revendications 1 à 5, **caractérisé en ce qu'**une roue de ventilateur (18) est aménagée sur l'arbre de rotor (2) entre le rotor (3) et le palier lisse (7).

7. Moteur électrique selon la revendication 6, **caractérisé en ce qu'**un commutateur (5) est aménagé entre le palier lisse (7) et la roue de ventilateur (18).
